# FASCICULE DE BREVET EUROPEEN

(11) **EP 1 186 533 B1**
(45) Date de publication et mention de la délivrance du brevet: **31.05.2006**
(21) Numéro de dépôt: 01402139.8
(22) Date de dépôt: 08.08.2001
(51) Int. Cl.: B64D 15/04

(54) **Capot d'entrée d'air de moteur à réaction pourvu de moyens de dégivrage**
Lufteinlasshaube eines Strahltriebwerkes mit Enteisungsvorrichtung
Jet engine air intake fairing with de-icing device

(30) Priorité: 06.09.2000 FR 0011337
(43) Date de publication de la demande: 13.03.2002
(73) Titulaire: AIRBUS France, 31060 Toulouse (FR)
(72) Inventeur: Porte, Alain, 31770 Colomiers (FR); Viala, Stéphane, 31380 Montjoire (FR); Barbara, Olivier, 31000 Toulouse (FR)
(74) Mandataire: Bonnetat, Christian

(56) Documents cités:
- US-A- 4 688 745

## Description

La présente invention concerne le dégivrage des capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud sous pression.

A cet effet, un tel capot d'entrée d'air comporte, de façon connue, par example de US-A-4688745,
- un bord d'attaque creux délimitant une chambre périphérique annulaire interne, fermée par une cloison interne (ou cadre) et pourvue d'au moins un orifice mettant en communication ladite chambre interne avec l'extérieur ; et
- une conduite d'alimentation en air chaud, apte à être raccordée, du côté arrière opposé audit bord d'attaque, audit circuit de circulation d'air chaud sous pression et, du côté avant vers le bord d'attaque, à un injecteur injectant un flux dudit air chaud sous pression dans ladite chambre annulaire.

Ainsi, ledit flux d'air chaud circule dans ladite chambre annulaire en la réchauffant avant de s'échapper à l'extérieur à travers ledit orifice de communication.

On a remarqué que, dans les capots connus de ce type, le réchauffement n'était pas homogène dans ladite chambre annulaire. En effet, au voisinage dudit injecteur les parois de ladite chambre annulaire sont portées à une température très élevée (plusieurs centaines de degrés Celsius) alors que les zones de cette chambre éloignées dudit injecteur sont soumises à des températures relativement basses. Il en résulte donc qu'au voisinage de l'injecteur les parois de ladite chambre annulaire risquent d'être endommagées, alors que le dégivrage n'est pas optimal pour lesdites zones éloignées de l'injecteur.

La présente invention a pour objet de remédier à ces inconvénients.

A cette fin, selon l'invention, le capot d'entrée d'air de moteur à réaction, notamment pour aéronef, pourvu de moyens de dégivrage de son bord d'attaque et comportant à cet effet :
- un bord d'attaque creux délimitant une chambre périphérique annulaire interne, fermée par une cloison interne et pourvue d'au moins un orifice mettant en communication ladite chambre annulaire avec l'extérieur ; et
- une conduite d'alimentation en air chaud, apte à être raccordée, à son extrémité arrière opposée audit bord d'attaque, à un circuit d'air chaud sous pression et, à son extrémité avant vers ledit bord d'attaque, à un injecteur injectant un flux dudit air chaud sous pression dans ladite chambre annulaire, de sorte que ledit flux d'air chaud circule dans ladite chambre annulaire en la réchauffant avant de s'échapper à l'extérieur à travers ledit orifice de communication,
est remarquable en ce que :
- ledit orifice de communication est calibré pour ne permettre l'évacuation vers l'extérieur que d'une partie dudit flux d'air chaud en circulation dans ladite chambre annulaire, l'autre partie dudit flux étant amenée à recirculer dans cette chambre annulaire ; et
- il est prévu, à l'intérieur de ladite chambre annulaire, un mélangeur pour former, à chaque instant, le mélange du flux d'air chaud en cours d'injection par ledit injecteur avec la partie dudit flux d'air en recirculation, injecté antérieurement.

Ainsi, la présente invention permet d'homogénéiser la température du flux d'air en circulation dans la chambre annulaire, avec comme conséquence la suppression des points chauds au voisinage de l'injecteur et un meilleur dégivrage des parties du bord d'attaque du capot éloignées de ce dernier.

Dans un mode de réalisation particulièrement simple, ledit mélangeur peut présenter une forme allongée particulière, de préférence la forme d'un tube, dont les deux extrémités sont ouvertes, ledit mélangeur recevant, à son extrémité amont disposée en regard dudit injecteur, à la fois ledit flux d'air chaud en cours d'injection et ladite partie dudit flux d'air en recirculation, et délivrant ledit mélange à son extrémité aval, opposée audit injecteur.

On notera que, dans le cadre de la présente invention, ledit mélangeur peut présenter toute forme permettant d'obtenir un mélange homogène desdits deux flux.

De préférence, pour pouvoir être aisément logé dans ladite chambre annulaire, ledit mélangeur est courbé en portion d'anneau, en correspondance avec la forme de ladite chambre annulaire.

Pour accroître encore plus l'homogénéisation en température du flux d'air chaud circulant dans ladite chambre annulaire et, donc, augmenter encore l'efficacité du dégivrage tout en supprimant plus efficacement les points chauds, il est avantageux que ledit mélangeur comporte des moyens pour mettre ledit mélange de flux d'air chaud en rotation tourbillonnaire sur lui-même, à la manière d'un cyclone. Ainsi, ledit flux d'air chaud parcourt ladite chambre annulaire en tournant sur lui-même.

Bien que lesdits moyens de mise en rotation dudit mélange d'air chaud pourraient être constitués par des palettes ou des aubes disposées à l'intérieur dudit mélangeur, il est avantageux qu'ils soient de nature à utiliser l'énergie de l'air chaud amené par ladite conduite d'alimentation.

A cet effet, lesdits moyens de mise en rotation du flux d'air chaud peuvent comporter au moins un injecteur auxiliaire d'air chaud, disposé latéralement et tangentiellement par rapport audit mélangeur, en aval dudit injecteur. Dans ce cas, il est avantageux que ledit injecteur auxiliaire soit alimenté en air chaud par une dérivation de ladite conduite d'amenée d'air chaud. La position dudit injecteur auxiliaire le long du mélangeur, ainsi que l'angle d'inclinaison de l'axe dudit injecteur auxiliaire sur l'axe du mélangeur, sont des paramètres de réglage de la mise en rotation du mélange des flux d'air chaud. Le nombre d'injecteurs auxiliaires utilisés constitue également un tel paramètre.

De plus, l'ouverture du ou des injecteurs auxiliaires au niveau du mélangeur présente, de préférence, une forme rectangulaire ou allongée. Ceci permet d'engendrer un flux auxiliaire qui présente une pression plus élevée que celle du flux principal, ce qui améliore l'homogénéisation du mélange et la mise en rotation tourbillonnaire du flux.

En variante, lesdits moyens de mise en rotation du mélange du flux d'air chaud comportent au moins un injecteur auxiliaire d'air chaud, disposé au niveau dudit injecteur. Ce ou ces injecteur(s) auxiliaire(s) peuvent alors être alimenté(s) en air chaud, directement par ladite conduite d'alimentation, comme cela est le cas pour ledit injecteur. Il est alors avantageux que le ou les injecteur(s) auxiliaire(s) fasse(nt) partie intégrante dudit injecteur.

Par ailleurs, ledit injecteur qui peut être une pièce solidaire ou une pièce séparée du mélangeur, de forme quelconque, est de préférence agencé dans la première moitié du mélangeur.

On comprendra aisément que, grâce à la présente invention, les contraintes thermiques subies par les matériaux constituant le bord d'attaque sont moins fortes alors que le rendement de dégivrage est meilleur. Il est donc possible de réaliser ledit bord d'attaque avec des matériaux plus légers et moins chers et de diminuer la température de l'air prélevé sur le moteur. Par voie de conséquence, la consommation dudit moteur en combustible est réduite.

Les figures du dessin annexé feront bien comprendre comment l'invention peut être réalisée. Sur ces figures, des références identiques désignent des éléments semblables.

La figure 1 montre schématiquement, en perspective éclatée, un moteur d'aéronef à réaction et ses différents capotages, ledit moteur étant pourvu d'un capot d'arrivée d'air conforme à la présente invention

La figure 2 est une coupe transversale agrandie de la chambre périphérique annulaire interne de ce capot, au niveau de l'injecteur d'air chaud, cette coupe correspondant à la ligne II-II de la figure 1 passant par l'axe de la conduite d'alimentation en air chaud.

La figure 3 illustre, schématiquement en perspective, un premier mode de réalisation du mélangeur conforme à la présente invention.

La figure 4 illustre, schématiquement en perspective, un autre mode de réalisation du mélangeur conforme à la présente invention.

La figure 5 est une coupe axiale partielle à travers l'injecteur de la figure 4, selon la ligne V-V de cette dernière.

Les figures 6 et 7 sont respectivement des coupes selon les lignes VI-VI et VII-VII de la figure 5.

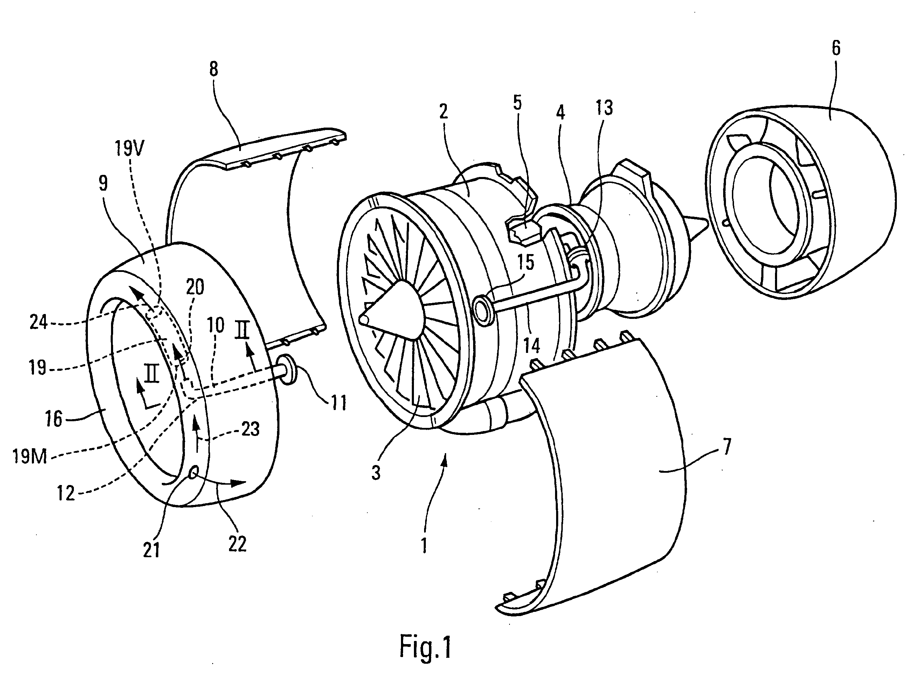

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

Comme cela est illustré schématiquement sur la figure 1, le capot d'entrée d'air 9 comporte une conduite interne 10, pourvue à son extrémité arrière, dirigée vers le moteur 1, d'un élément de raccord 11 et à son extrémité avant, logée dans le bord d'attaque creux 16 dudit capot d'entrée d'air, d'un injecteur 12. Par ailleurs, sur un étage de compresseurs du moteur 1 est agencée une prise d'air chaud sous pression 13 qui est connectée à une conduite 14, pourvue, en regard de l'élément de raccord 11 de la conduite 10, d'un élément de raccord complémentaire 15.

Ainsi, lorsque les éléments de raccord 11 et 15 complémentaires sont reliés l'un à l'autre, de l'air chaud sous pression prélevé en 13 sur le moteur 1 est acheminé par les conduites 14 et 10 jusqu'à l'injecteur 12.

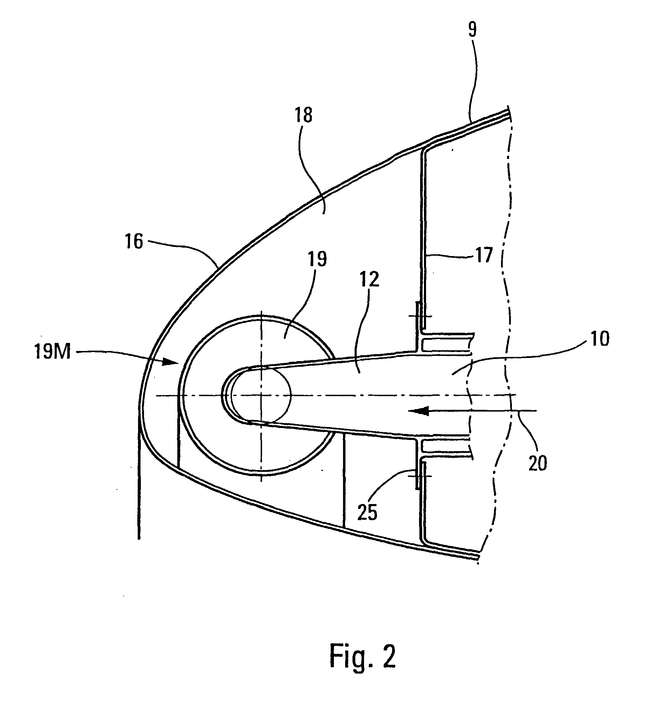

Comme le montre en détail et à plus grande échelle la demi-coupe transversale de la figure 2, le bord d'attaque creux 16 est fermé du côté arrière par une cloison interne 17, de sorte qu'une chambre périphérique annulaire interne 18 est formée à l'intérieur dudit bord d'attaque 16. L'injecteur 12 traverse ladite cloison interne 17 et est coudé pour déboucher dans la chambre annulaire 18, parallèlement au bord d'attaque 16. Cet injecteur 12 est solidaire d'une collerette 25 permettant de le fixer sur la cloison interne 17.

Conformément à la présente invention, à l'intérieur de ladite chambre annulaire 18 et en aval dudit injecteur 12, le capot 9 comporte un mélangeur 19, allongé et disposé parallèlement audit bord d'attaque 16. Le mélangeur 19 est avantageusement formé par un tube ouvert à ses deux extrémités 19M et 19V et courbé en forme de portion d'anneau, en correspondance avec la forme de la chambre annulaire 18.

L'injecteur 12 injecte dans le mélangeur 19, à travers l'extrémité amont 19M de celui-ci, un flux d'air chaud 20 qu'il reçoit de la conduite 10. Par suite, de l'air chaud traverse ledit mélangeur 19 et ressort à travers l'extrémité aval 19V de celui-ci pour circuler à l'intérieur de la chambre annulaire 18 et réchauffer le bord d'attaque 16.

Au moins un orifice 21 est prévu dans ledit bord d'attaque 16 pour l'évacuation à l'air libre (flèche 22) de l'air chaud ayant circulé à l'intérieur du bord d'attaque 16. Cet orifice peut également être prévu dans la cloison interne 17.

En réalité, l'orifice 21 est calibré pour ne permettre l'évacuation vers l'extérieur que d'une partie 22 du flux d'air chaud en circulation dans la chambre annulaire 18, l'autre partie 23 dudit flux étant amenée à recirculer dans ladite chambre annulaire 18.

Ainsi, la partie du flux recirculée 23, qui a été antérieurement injectée par l'injecteur 12 et dont la température a été abaissée par transfert au bord d'attaque 16, pénètre dans le mélangeur 19 à travers ladite extrémité amont 19M et s'y mélange au flux 20, plus chaud, en cours d'injection par l'injecteur 12. C'est donc le flux 24, résultant du mélange du flux chaud 20 et du flux recirculé 23, moins chaud, qui sort du mélangeur 19, à travers l'extrémité aval 19V, pour parcourir la chambre annulaire 18.

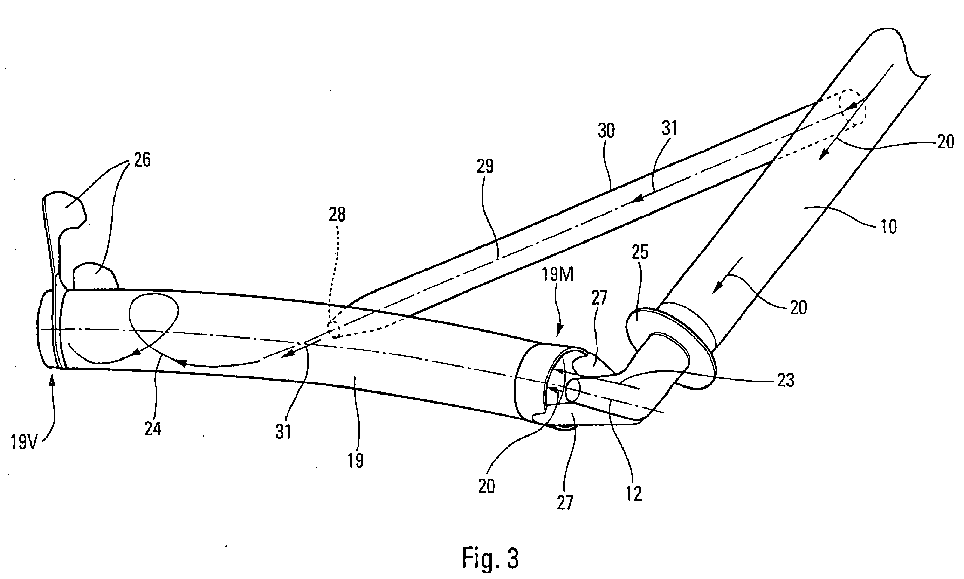

Sur la figure 3, on a représenté un exemple de réalisation du mélangeur 19, comportant des moyens de mise en rotation tourbillonnaire du flux de mélange 24. Sur cette figure, le mélangeur tubulaire 19 est supporté dans la chambre annulaire 18 (non représentée) par des pattes 26, prévues à son extrémité aval 19V, et par des pattes 27 prévues à son extrémité amont 19M et solidaires de l'injecteur 12, lui-même fixé à la cloison 17, grâce à la collerette 25.

Le mélangeur 19 de la figure 3 comporte, de plus, au moins un injecteur auxiliaire d'air chaud 28, disposé latéralement par rapport audit mélangeur 19, entre les extrémités 19M et 19V de celui-ci. L'axe 29 dudit injecteur auxiliaire 28 peut être incliné par rapport au mélangeur 19. Cet injecteur auxiliaire 28 est alimenté en air chaud par une dérivation 30 de la conduite d'alimentation 10, prélevant sur cette dernière un flux d'air chaud 31.

Le flux d'air chaud 31 met en rotation, sur lui-même, le flux de mélange 24 qui devient tourbillonnaire et parcourt alors la chambre annulaire 18, à la manière d'un cyclone.

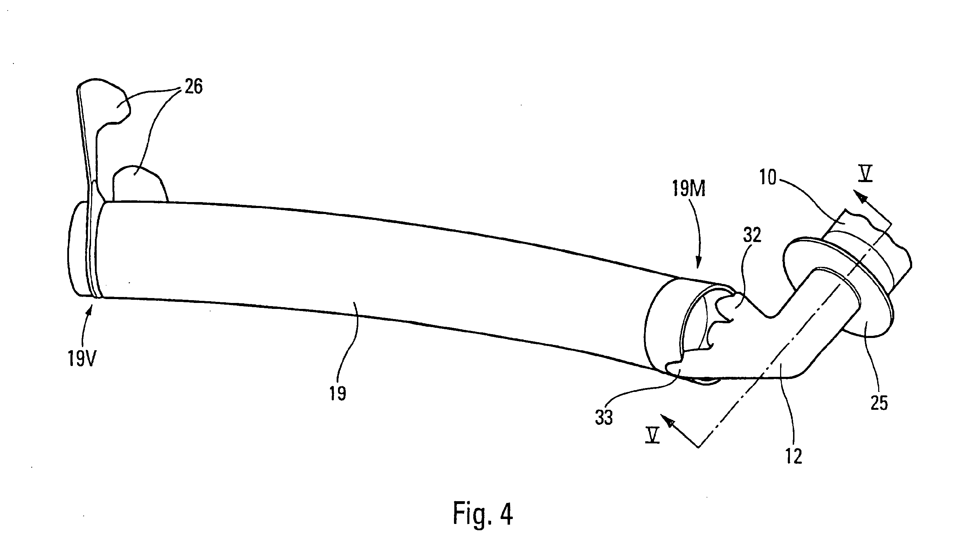

Dans la variante de réalisation des figures 4 à 7, le mélangeur 19 est pourvu d'un injecteur 12, pourvu de deux cornes de soufflage latérales 32 et 33, alimentées en gaz chaud par la conduite 10, en commun avec l'injecteur 12. Les cornes 32 et 33 servent de plus à la fixation du mélangeur 19 dans la chambre 18 (non représentée) en coopération avec les pattes 26.

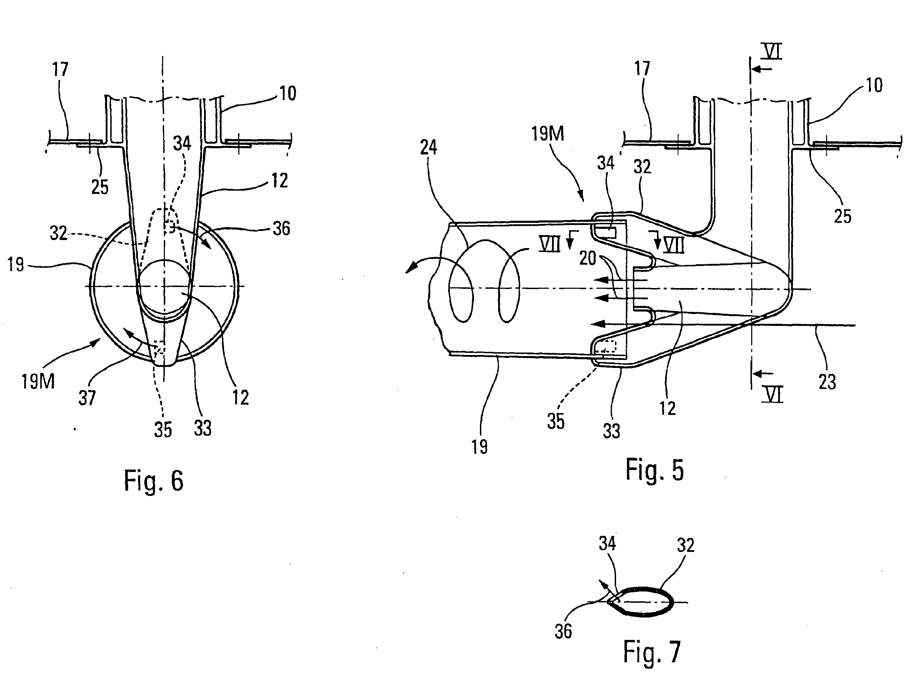

Les cornes latérales débouchent dans l'extrémité amont 19M du mélangeur 19 par des orifices excentrés et obliques 34 et 35 formant injecteurs auxiliaires et émettant des jets d'air chaud 36 et 37, aptes à mettre en rotation tourbillonnaire le flux de mélange 24, comme cela est illustré sur la figure 6.

Bien que sur les figures 4 à 7 on ait représenté deux cornes de soufflage, il va de soi que le nombre de celles-ci pourrait être soit égal à 1, soit supérieur à 2.

## Revendications

1. Capot d'entrée d'air (9) de moteur à réaction (1), notamment pour aéronef, pourvu de moyens de dégivrage de son bord d'attaque et comportant à cet effet :
- un bord d'attaque (16) creux délimitant une chambre périphérique annulaire interne (18), fermée par une cloison interne (17) et pourvue d'au moins un orifice (21) mettant en communication ladite chambre annulaire (18) avec l'extérieur ; et
- une conduite d'alimentation d'air chaud (10), apte à être raccordée, à son extrémité arrière opposée audit bord d'attaque (16), à un circuit d'air chaud sous pression (14) et, à son extrémité avant vers ledit bord d'attaque (16), à un injecteur (12) injectant un flux (20) dudit air chaud sous pression dans ladite chambre annulaire (18), de sorte que ledit flux d'air chaud circule dans ladite chambre annulaire (18) en la réchauffant avant de s'échapper à l'extérieur à travers ledit orifice de communication (21), ledit orifice de communication (21) étant calibré pour ne permettre l'évacuation vers l'extérieur que d'une partie (22) dudit flux d'air chaud en circulation dans ladite chambre annulaire (18), l'autre partie (23) dudit flux étant amenée à recirculer dans cette chambre annulaire (18),
**caractérisé en ce que** :
- à l'intérieur de ladite chambre annulaire (18), en aval dudit injecteur (12), est prévu un mélangeur (19) pour former, à chaque instant, le mélange (24) du flux d'air chaud (20) en cours d'injection par ledit injecteur (12) avec la partie (23) dudit flux d'air en recirculation, injecté antérieurement ; et
- ledit mélangeur (19) comporte des moyens pour mettre ledit mélange de flux d'air (24) en rotation tourbillonnaire sur lui-même, à la manière d'un cyclone, et est apte à homogénéiser la température dudit mélange de flux d'air (24).

2. Capot d'entrée d'air selon la revendication 1,
**caractérisé en ce que** ledit mélangeur (10) présente deux extrémités ouvertes et reçoit, à son extrémité amont (19M) disposée en regard dudit injecteur (12), à la fois ledit flux d'air chaud (20) en cours d'injection et ladite partie (23) dudit flux d'air en recirculation, et délivre ledit flux de mélange (24) à son extrémité aval (19V).

3. Capot d'entrée d'air selon la revendication 2,
**caractérisé en ce que** ledit mélangeur (19) est courbé en portion d'anneau, en correspondance avec la forme de ladite chambre périphérique annulaire interne (18).

4. Capot d'entrée d'air selon l'une des revendications 1 à 3, **caractérisé en ce que** ledit mélangeur (19) comporte des moyens pour mettre ledit mélange de flux d'air chaud en rotation tourbillonnaire sur lui-même, à la manière d'un cyclone.

5. Capot d'entrée d'air selon la revendication 4,
**caractérisé en ce que** lesdits moyens de mise en rotation dudit mélange de flux utilisent l'énergie de l'air chaud dans ladite conduite d'alimentation (10).

6. Capot d'entrée d'air selon la revendication 5,
**caractérisé en ce que** lesdits moyens de mise en rotation comportent au moins un injecteur auxiliaire d'air chaud (28), disposé latéralement et tangentiellement par rapport audit mélangeur (19), en aval dudit injecteur (12).

7. Capot d'entrée d'air selon la revendication 6,
**caractérisé en ce que** ledit injecteur auxiliaire (28) est alimenté en air chaud par une dérivation (30) de ladite conduite d'alimentation (10).

8. Capot d'entrée d'air selon la revendication 5,
**caractérisé en ce que** lesdits moyens de mise en rotation du mélange de flux comportent au moins un injecteur auxiliaire d'air chaud (34, 35), disposé au niveau dudit injecteur (12).

9. Capot d'entrée d'air selon la revendication 8,
**caractérisé en ce que** ledit injecteur auxiliaire (34, 35) est alimenté en air chaud, directement par ladite conduite d'alimentation (10).

10. Capot d'entrée d'air selon la revendication 9,
**caractérisé en ce que** ledit injecteur auxiliaire (34, 35) fait partie intégrante dudit injecteur (12).

## Claims

1. An air inlet cowl (9) for a jet engine (1), particularly for an aircraft, provided with means for de-icing its leading edge and for this purpose comprising:
- a hollow leading edge (16) delimiting an internal annular peripheral chamber (18), closed by an internal partition (17) and provided with at least one orifice (21) placing said annular chamber (18) in communication with the outside; and
- a hot air supply pipe (10) capable of being connected, at its rear end away from said leading edge (16), to a pressurized hot air circuit (14) and, at its front end towards said leading edge (16) , to an injector (12) injecting a stream (20) of said pressurized hot air into said annular chamber (18) so that said stream of hot air flows through said annular chamber (18), heating it, before escaping to the outside through said communication orifice (21), said communication orifice (21) being calibrated to allow only some (22) of said stream of hot air flowing through said annular chamber (18) to escape to the outside, the rest (23) of said stream being recirculated in this annular chamber (18),
**characterized in that** :
- inside said annular chamber (18), downstream of said injector (12), there is a mixer (19) for forming, at each moment, a mixture (24) of the stream of hot air (20) being injected by said injector (12) with the part (23) of said previously injected stream of air that is recirculating ; and
- said mixer (19) comprises means for causing said mixture of hot air stream (24) to effect a swirling rotation in the manner of a cyclone, and is able to even out the temperature of said mixture of hot air stream (24).

2. The air inlet cowl as claimed in claim 1,
**characterized in that** said mixer (19)has two open ends and, at its upstream end (MM) arranged facing said injector (12), receives both said stream of hot air (20) being injected and said part (23) of said stream of air being recirculated, and delivers said mixed stream (24)at its downstream end (19V).

3. The air inlet cowl as claimed in claim 2,
**characterized in that** said mixer (19) is curved into a portion of an annulus, to correspond to the shape of said internal annular peripheral chamber (18).

4. The air inlet cowl as claimed in one of claims 1 to 3,
**characterized in that** said mixer (19) comprises means for causing said mixture of hot air stream a swirling rotation in the manner of a cyclone.

5. The air inlet cowl as claimed in claim 4,
**characterized in that** said means for causing said mixture of stream to swirl use the energy of the hot air in said supply pipe (10).

6. The air inlet cowl as claimed in claim 5,
**characterized in that** said swirl-inducing means comprise at least one auxiliary hot air injector (28) arranged laterally and tangentially with respect to said mixer (19), downstream of the aforesaid injector (12) .

7. The air inlet cowl as claimed in claim 6,
**characterized in that** said auxiliary injector (28) is supplied with hot air by a tapping (30) off said supply pipe (10) .

8. The air inlet cowl as claimed in claim 5,
**characterized in that** said means for causing the mixture of stream to swirl comprise at least one auxiliary hot air injector (34,35) arranged in the region of the aforesaid injector.

9. The air inlet cowl as claimed in claim 8,
**characterized in that** said auxiliary injector (34,35)is supplied with hot air directly by said supply pipe (10).

10. The air inlet cowl as claimed in claim 9,
wherein said auxiliary injector (34,35) forms an integral part of the aforesaid injector (12.

## Patentansprüche

1. Lufteinlasshaube (9) für ein Strahltriebwerk (1), insbesondere für ein Flugzeug, mit einer Enteisungseinrichtung für seine Angriffsseite und zu diesem Zweck mit:
- einer hohlen Angriffskante (16), die eine innere ringförmige Umfangskammer (18) begrenzt, welche durch eine innere Trennwand (17) verschlossen ist und mit wenigstens einer Öffnung (21) versehen ist, die die Ringkammer (18) mit dem Äußeren in Kommunikation setzt; und
- einer Versorgungsleitung (10) für Heißluft, die so ausgebildet ist, dass sie an ihrem hinteren Ende, entgegen gesetzt zur Angriffskante (16), mit einem Kreislauf (14) für heiße Druckluft und an ihrem vorderen Ende, in Richtung der Angriffskante (16), mit einem Injektor (12) verbunden ist, der einen Strom (20) der heißen Druckluft in die Ringkammer (18) injiziert, derart, dass der Heißluftstrom in der Ringkammer (18) zirkuliert und diese erwärmt, bevor sie durch die Kommunikationsöffnung (21) nach außen entweicht, wobei die Kommunikationsöffnung (21) kalibriert ist, um nur die Evakuierung eines Teils (22) des sich in der Ringkammer (18) in Zirkulation befindlichen Heißluftstroms zu erlauben, wobei der andere Teil (23) des Stroms dazu gebracht wird, in dieser Ringkammer (18) zu re-zirkulieren,
**dadurch gekennzeichnet, dass**:
- im Inneren der Ringkammer (18), stromabwärts des Injektors (12), eine Mischeinrichtung (19) vorgesehen ist, um jederzeit das Gemisch (24) aus dem Heißluftstrom (20) im Verlauf der Injektion durch den Injektor (12) mit dem Teil (23) des früher injizierten, sich in Rezirkulation befindlichen Luftstroms zu bilden; und
- die Mischeinrichtung (19) Mittel umfasst, um das Luftstromgemisch (24) in eine turbulente Drehung um sich selbst zu versetzen, in der Art eines Zyklons, und so ausgebildet ist, dass sie die Temperatur des Luftstromgemisches (24) homogenisiert.

2. Lufteinlasshaube nach Anspruch 1,
**dadurch gekennzeichnet, dass** die Mischeinrichtung (10) zwei offene Enden aufweist und an ihrem stromaufwärts liegenden Ende (19M), das gegenüber dem Injektor (12) angeordnet ist, gleichzeitig den Heißluftstrom (20) im Verlauf der Injektion und den Teil (23) des in Rezirkulation befindlichen Luftstroms erhält und den Mischstrom (24) an sein stromabwärts liegendes Ende (19V) liefert.

3. Lufteinlasshaube nach Anspruch 2,
**dadurch gekennzeichnet, dass** die Mischeinrichtung (19) zu einem Ringabschnitt gebogen ist, entsprechend der Form der inneren ringförmigen Umfangskammer (18).

4. Lufteinlasshaube nach einem der Ansprüche 1 bis 3, **dadurch gekennzeichnet, dass** die Mischeinrichtung (19) Mittel umfasst, um das Gemisch des Heißluftstroms in eine turbulente Drehung um sich selbst, in der Art eines Zyklons, zu versetzen.

5. Lufteinlasshaube nach Anspruch 4,
**dadurch gekennzeichnet, dass** die Mittel, mit denen das Stromgemisch in Drehung versetzt wird, Energie der Heißluft in der Versorgungsleitung (10) nutzen.

6. Lufteinlasshaube nach Anspruch 5,
**dadurch gekennzeichnet, dass** die Mittel, die eine Drehung verursachen, wenigstens einen Zusatzinjektor (28) für Heißluft umfassen, der seitlich und tangential in Bezug zu der Mischeinrichtung (19), stromabwärts des Injektors (12) angeordnet ist.

7. Lufteinlasshaube nach Anspruch 6,
**dadurch gekennzeichnet, dass** der Zusatzinjektor (28) durch einen Abzweig (30) der Versorgungsleitung (10) mit Heißluft versorgt wird.

8. Lufteinlasshaube nach Anspruch 5,
**dadurch gekennzeichnet, dass** die Mittel, mit denen das Stromgemisch in Drehung versetzt wird, wenigstens einen Heißluft-Zusatzinjektor (34, 35) umfasst, der am Injektor (12) angeordnet ist.

9. Lufteinlasshaube nach Anspruch 8,
**dadurch gekennzeichnet, dass** der Zusatzinjektor (34, 35) direkt durch die Versorgungsleitung (10) mit Heißluft versorgt wird.

10. Lufteinlasshaube nach Anspruch 9,
**dadurch gekennzeichnet, dass** der Zusatzinjektor (34, 35) einen integrierten Teil des Injektors (12) bildet.
